# EUROPÄISCHE PATENTSCHRIFT

(11) **EP 0 824 467 B1**
(45) Veröffentlichungstag und Bekanntmachung des Hinweises auf die Patenterteilung: **02.06.1999**
(21) Anmeldenummer: 96910887.7
(22) Anmeldetag: 06.05.1996
(51) Int. Cl.: B65D 45/30, A47J 27/08

(54) **DECKEL FÜR EINEN BEHÄLTER**
COVER FOR A CONTAINER
COUVERCLE DE RECIPIENT

(30) Priorität: 08.05.1995 CH 1323/95
(43) Veröffentlichungstag der Anmeldung: 25.02.1998
(73) Patentinhaber: AMC International Alfa Metalcraft Corporation AG, 6343 Rotkreuz (CH)
(72) Erfinder: ALIESCH, Hans, Peter, CH-6005 Luzern (CH); MÜLLER, Kurt, CH-6285 Hitzkirch (CH); RÖÖSLI, Pius, CH-6010 Kriens (CH); WALSER, Hans, Heinrich, CH-7214 Grüsch (CH)
(74) Vertreter: Liebetanz, Michael, Dipl.-Phys.
(86) Internationale Anmeldenummer: CH9600170
(87) Internationale Veröffentlichungsnummer: WO9635621

(56) Entgegenhaltungen:
- WO-A-94/13183
- DE-C- 360 479
- FR-A- 1 104 323
- GB-A- 202 348
- NL-C- 23 619
- US-A- 4 711 366

## Beschreibung

Die vorliegende Erfindung betrifft einen Deckel für einen Behälter gemäss dem Oberbegriff des Patentanspruchs 1.

Ein solcher Deckel ist aus der DE-C-360 479 bekannt, der einen Verschluss aufweist, der getrennt von dem Deckel auf dem Behälter aufgesetzt ist. Mit Hilfe eines Hebelverschlusses wird der Verschlussring mit einem eingelegten Gummiring um die Behälter- und Deckelränder gelegt und dicht verschlossen. Druckdichte Deckel sind insbesondere dann notwendig, wenn in dem Behälter ein Überdruck entsteht, der beispielsweise bei Kochgefässen vorteilhaft zum schnelleren Garen unter Dampfdruck eingesetzt wird.

Bei bekannten Lösungen wird der Deckel meist mittels am Deckel angebrachter Riegel, die nach dem Aufsetzen des Dekkels auf den Behälter durch eine Dreh-, Schwenk- oder Gleitbewegung zum Untergreifen des umlaufenden abgewinkelten Behälterrandes gebracht werden, und unter Verwendung einer elastischen Dichtung so auf dem Behälter befestigt, dass ein Überdruck im Behälterinneren aufgebaut werden kann. Nachteile dieser bekannten Lösungen sind meist eine aufwendige Ausführung und eine umständliche Handhabung. Die Aufgabe der Erfindung besteht daher darin, einen Deckel für einen Behälter, insbesondere für ein Kochgefäss zu schaffen, der besonders leicht zu bedienen ist.

Diese Aufgabe wird erfindungsgemäss durch einen Deckel für einen Behälter mit den im kennzeichnenden Teil des Patentanspruchs 1 angegebenen Merkmalen gelöst. Weitere vorteilhafte Ausgestaltungen der Erfindung sind in den abhängigen Ansprüchen angegeben.

Im folgenden werden einige Ausführungsbeispiele der Erfindung anhand von Zeichnungen näher erläutert. Es zeigen:
- Fig. 1: eine schematische Darstellung im Schnitt längs einer Symmetrieebene einer ersten Ausführung eines Deckels für ein Kochgefäss nach der Erfindung mit einem Zangen-Verschlussmechanismus in geschlossener Stellung,
- Fig. 2: eine schematische Darstellung dieser ersten Ausführung mit dem Verschlussmechanismus in offener Stellung,
- Fig. 3 und 4: schematische Teildarstellungen dieser ersten Ausführung längs einer senkrecht zur Symmetrieachse verlaufenden Ebene mit dem Zangen-Verschlussmechanismus in geschlossener bzw. offener Stellung,
- Fig. 5: eine schematische Darstellung im Schnitt längs einer Symmetrieebene einer zweiten Ausführung eines Deckels für ein Kochgefäss nach der Erfindung mit einem Schwenkgriff-Verschlussmechanismus in geschlossener Stellung,
- Fig. 6 und 7: schematische Teildarstellungen dieser zweiten Ausführung längs einer senkrecht zur Symmetrieachse verlaufenden Ebene mit den Schwenkgriff-Verschlussmechanismus in geschlossener bzw. offener Stellung,
- Fig. 8: eine schematische Darstellung im Schnitt längs einer Symmetrieebene einer dritten Ausführung eines Deckels für ein Kochgefäss nach der Erfindung mit einem Klemmgriff-Verschlussmechanismus in geschlossener Stellung,
- Fig. 9 und 10: schematische Teildarstellungen dieser dritten Ausführung längs einer senkrecht zur Symmetrieachse verlaufenden Ebene mit dem Klemmgriff-Verschlussmechanismus in geschlossener bzw. offener Stellung,
- Fig. 11: eine schematische Darstellung im Schnitt längs einer Symmetrieebene einer vierten Ausführung eines Deckels für ein Kochgefäss nach der Erfindung mit einem Aussengriff-Verschlussmechanismus in geschlossener Stellung,
- Fig. 12 und 13: schematische Teildarstellungen dieser vierten Ausführung längs einer senkrecht zur Symmetrieachse verlaufenden Ebene mit dem Aussengriff-Verschlussmechanismus in geschlossener bzw. offener Stellung,
- Fig. 14: eine schematische Darstellung im Schnitt längs einer Symmetrieebene einer fünften Ausführung eines Deckels für ein Kochgefäss nach der Erfindung mit einem Drehgriff-Verschlussmechanismus in geschlossener Stellung,
- Fig. 15 und 16: schematische Teildarstellungen dieser fünften Ausführung längs einer senkrecht zur Symmetrieachse verlaufenden Ebene mit dem Drehgriff-Verschlussmechanismus in geschlossener bzw. offener Stellung,
- Fig. 17: eine schematische Darstellung im Schnitt längs einer Symmetrieebene einer sechsten Ausführung eines Deckels für ein Kochgefäss nach der Erfindung mit einem Schiebegriff-Verschlussmechanismus in geschlossener Stellung,
- Fig. 18 und 19: schematische Teildarstellungen dieser sechsten Ausführung längs einer senkrecht zur Symmetrieachse verlaufenden Ebene mit dem Schiebegriff-Verschlussmechanismus in geschlossener bzw. offener Stellung,
- Fig. 20 und 21: schematische Darstellungen im Schnitt eines Verschlussringes für die erfindungsgemässen Verschlussmechanismen im geschlossenen bzw. offenen Zustand,
- Fig. 22 und 23: schematische Darstellungen im Schnitt einer weiteren Ausführung eines Verschlussringes für die verschiedenen Verschlussmechanismen nach der Erfindung, und
- Fig. 24 bis 27: schematische Darstellungen von zwei Varianten der fünften Ausführung mit einem Drehgriff-Verschlussmechanismus.

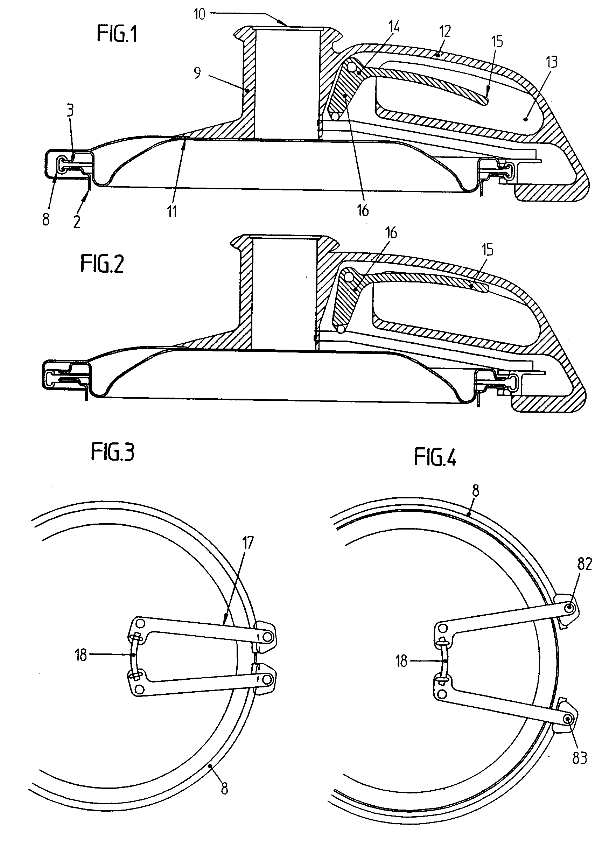

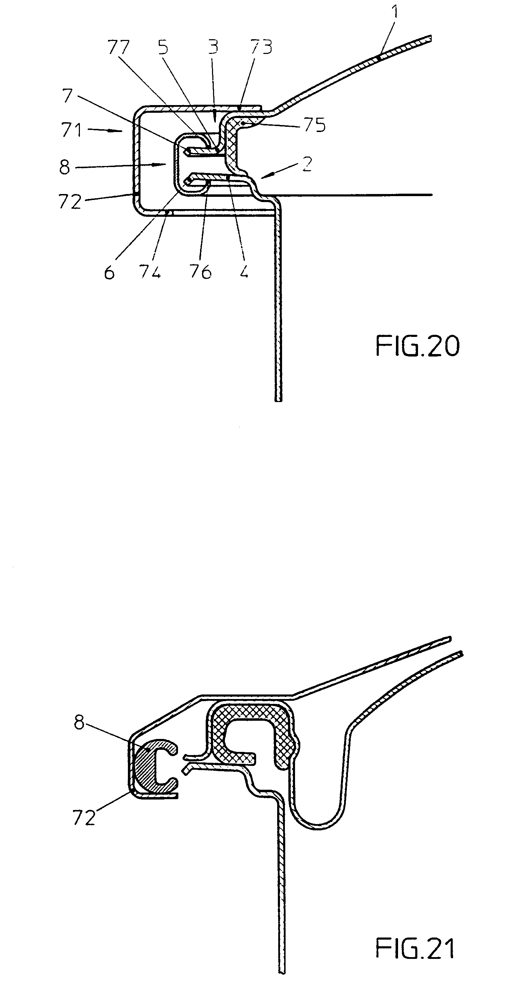

Die in den Figuren 1, 2, 5, 8, 11, 14, 17, 24 und 26 dargestellten Deckel können, wie in den Figuren 20 bis 23 näher angegeben, auf einen Behälter mit einem abgewinkelten umlaufenden Rand 2 aufgesetzt werden. Der nach oben etwas konvex ausgebildete Deckel 1 (Figur 20) weist ebenfalls einen abgewinkelten umlaufenden Rand 3 auf. Die Endpartien 4, 5 der Ränder 2 und 3 befinden sich teilweise in zwei parallelen Ebenen. Die Enden der Partien 4 und 5 können jedoch etwas nach unten gebogen sein, um je eine ringförmig gebogene Erweiterung 6 bzw. 7 zu bilden. Der Verschlussmechanismus nach Figur 20 umfasst einen etwas elastischen offenen Verschlussring 8, dessen Querschnitt C-förmig ausgebildet ist, wobei die Erweiterungen 6 und 7 in die C-Öffnung des Rings 8 einfügbar sind. Die Erweiterung 6 des Randes 4 dient dem leichteren und tropffreien Ausschütten.

Im oberen Teil des Deckels 11 nach Figur 1 kann ein Griffknopf 9 mit einem Anzeigegerät 10 vorhanden sein. Ähnliche Elemente der verschiedenen Deckel und Verschlussmechanismen werden in den Figuren 1 bis 20 mit denselben Bezugszeichen 2 bis 10 bezeichnet. Auf dem Deckel 11 nach Figur 1 ist ein länglicher Handgriff 12 angeordnet, der sich vom Griffknopf 9 radial nach aussen und etwas über den Deckelrand hinaus erstreckt. Der Handgriff 12 hat eine für vier Finger einer bedienenden Person dimensionierte Öffnung 13 und einen L-förmigen Hebel 14, der derart schwenkbar angeordnet ist, dass sein langer L-Arm 15 sich im Bereich der Öffnung 13 befindet und durch die Finger nach oben gezogen werden kann, um das Ende seines kurzen L-Armes 16 (Figuren 1 und 2) nach rechts zu verschieben und dadurch den Deckel in die offene Stellung zu bringen (Figur 2), indem der Verschlussring 8 aus seiner durch den Keil 6 (Figur 20) geklemmten Lage herausgezogen wird, und zwar gegen seine Federwirkung, da der Verschlussring 8 aus Metall, beispielsweise Stahl, ist und wegen seines grossen Durchmessers im Vergleich zu seiner Höhe eine grosse Federkraft entwickeln kann.

Figur 3 zeigt ein Zangensystem 17, das sich oberhalb oder unterhalb des Handgriffs 12 befinden kann und einen flexiblen Bügel 18 umfasst. Wenn der Verschluss-Ring 8 sich in seiner Ruhelage (Figur 3) befindet, die dem geschlossenen Zustand des Verschlussmechanismus entspricht, entwickelt er eine Kraft, die das Zangensystem geschlossen hält, derart, dass der mittlere Bereich des Bügels 18 das Ende des kurzen L-Armes 16 gegen die Symmetrieachse des Deckels 11 drückt, so dass sich der als Handhebel dienende lange L-Arm 15 in seiner unteren Position befindet.

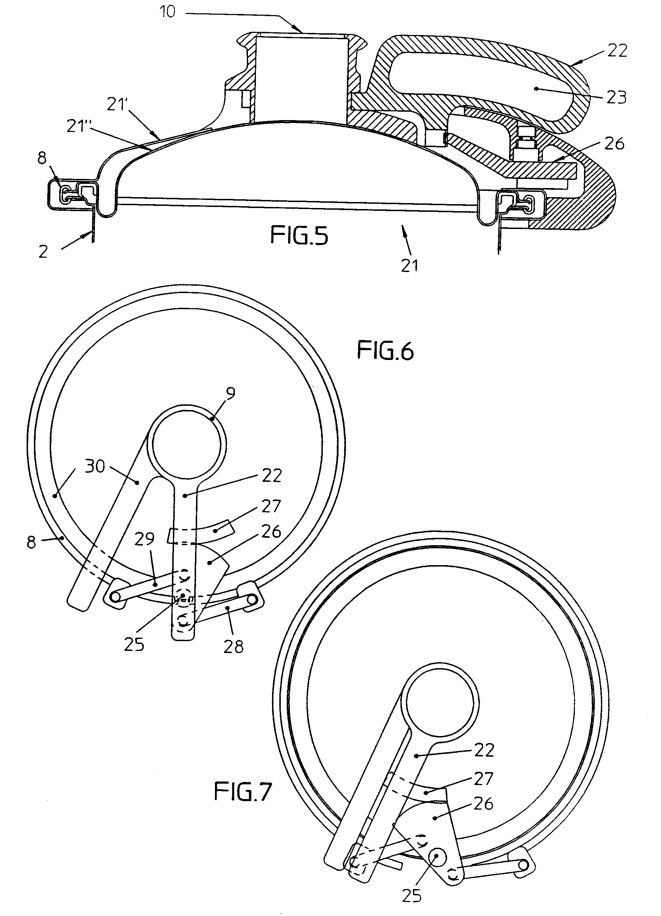

Figur 4 zeigt das Zangensystem 17 in der offenen Lage, bei der sich der Handhebel 15 (Figur 2) in der oberen Position befindet und das Ende des L-Arms 16 den mittleren Bereich des Bügels 18 nach aussen drückt, so dass das Zangensystem gegen die Federkraft des Verschluss-Ringes 8 gespreizt ist.

Auf dem Deckel 21 nach Figur 5 ist ein Schwenkgriff 22 angeordnet, der sich vom Griffknopf 9 radial nach aussen und etwas über den Deckelrand hinaus erstreckt und der ebenfalls mit einer Öffnung 23 zur Erleichterung der Bedienung versehen ist. Der Schwenkgriff 22 ist um die zentrale Achse des Griffknopfs 9, das heisst seitlich bzw. tangential schwenkbar gelagert.

Figur 6 zeigt eine Schwenkvorrichtung 24 mit einem um einen Drehzapfen 25 ortsfest gelagerten Zahnsegment 26 und einem mit ihm zusammenwirkenden Zahnbogen 27, der mit dem Schwenkgriff 22 fest verbunden ist.

Symmetrisch um den Zapfen 25 sind zwei Arme 28, 29 schwenkbar gelagert, deren Enden mit je einem Ende des Verschluss-Ringes 8 gelenkig verbunden sind. Bei Schwenkung des Schwenkgriffs 22 von der Lage nach Figur 6 zur Lage nach Figur 7 wird die Bewegung des mit ihm verbundenen Zahnbogens 27 an das Zahnsegment 26 übertragen, das die Arme 28, 29 auseinanderdrückt, was ein Spreizen des Verschluss-Rings 8 zur Folge hat, der dadurch von seiner Klemmlage befreit wird. Der Deckel nach Figur 5 kann einen zweiten ortsfest angeordneten Handgriff 30 aufweisen, der als Gegengriff dient und auch entfallen kann.

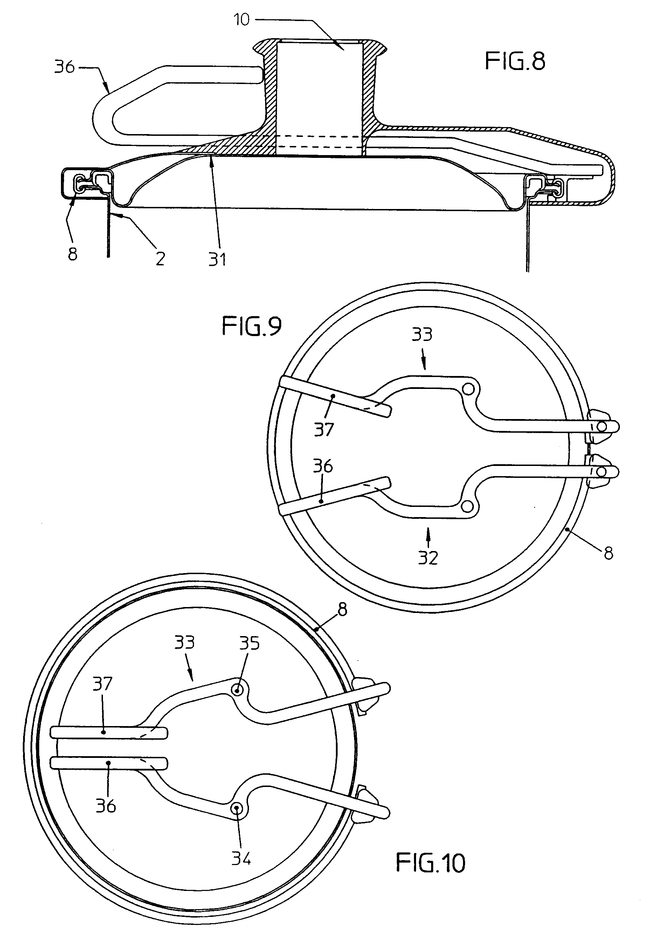

Der Verschlussmechanismus für den Deckel 31 nach Figur 8 umfasst zwei Klemmbügel 32, 33 (Figuren 9, 10), die schwenkbar um je einen Drehzapfen 34, 35 gelagert sind und sich nahezu diametral über den Deckel erstrecken. Die Klemmbügel 32, 33 sind jedoch in ihrem mittleren Bereich nach aussen gebogen, so dass sie dort einen freien Raum definieren, in dem sich der Griffknopf 9 befindet. Der eine Endbereich der Klemmbügel 32, 33 ist zur Erleichterung der Bedienung jeweils als offener Klemmgriff 36 bzw. 37 ausgebildet. Das andere Ende der Klemmbügel 32, 33 ist mit je einem Ende des Verschluss-Rings 8 gelenkig verbunden. Figur 9 zeigt die Klemmbügel 32, 33 im geschlossenen Zustand.

Wenn die bedienende Person die Klemmgriffe aneinanderdrückt (Figur 10) werden die Enden des C-Rings 8, die sich an der anderen Seite des Deckels befinden, gegen die Federkraft des C-Rings 8 gespreizt, der somit geöffnet wird.

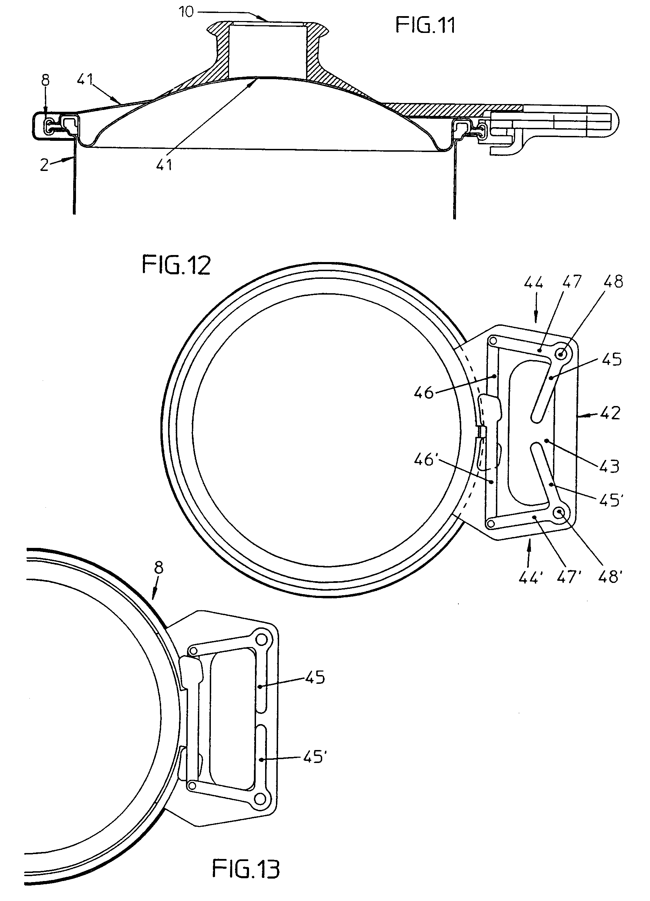

Der Deckel 41 nach Figur 11 weist eine als Aussengriff 42 ausgebildete relativ flache längliche Verlängerung auf, wobei dieser Aussengriff 42 ebenfalls mit einer länglichen Oeffnung 43 für die Finger versehen ist.

An den zwei Aussenecken des Aussengriffs 42 ist je ein zumindest angenähert L-förmig ausgebildeter Hebel 44, 44' in Zapfen 48, 48' schwenkbar gelagert, und zwar mit je einem freien Bedienungs-Hebelarm 45, 45' und einem endseitig gelenkig mit einer Schiebestange 46 bzw. 46' verbundenen Hebelarm 47, 47', wobei die anderen Enden der Schiebestangen 46, 46' gelenkig mit je einem Ende des Verschluss-Rings 8 verbunden sind.

Im geschlossenen Zustand (Figur 12) befinden sich die Hebelarme 45, 45' mitten im Bereich der Öffnung 43. Um den Deckel zu öffnen, werden die Hebelarme 45, 45' nach aussen geschwenkt, was ein Spreizen des C-Rings 8 gemäss Figur 13 zur Folge hat, indem der obere Hebelarm 45 das eine Ende des Verschluss-Rings 8 in der Zeichnung nach unten und der untere Hebelarm 45' das andere Ende des Verschluss-Rings 8 nach oben drückt, weil sich die Schiebestangen 46, 46' teilweise kreuzen.

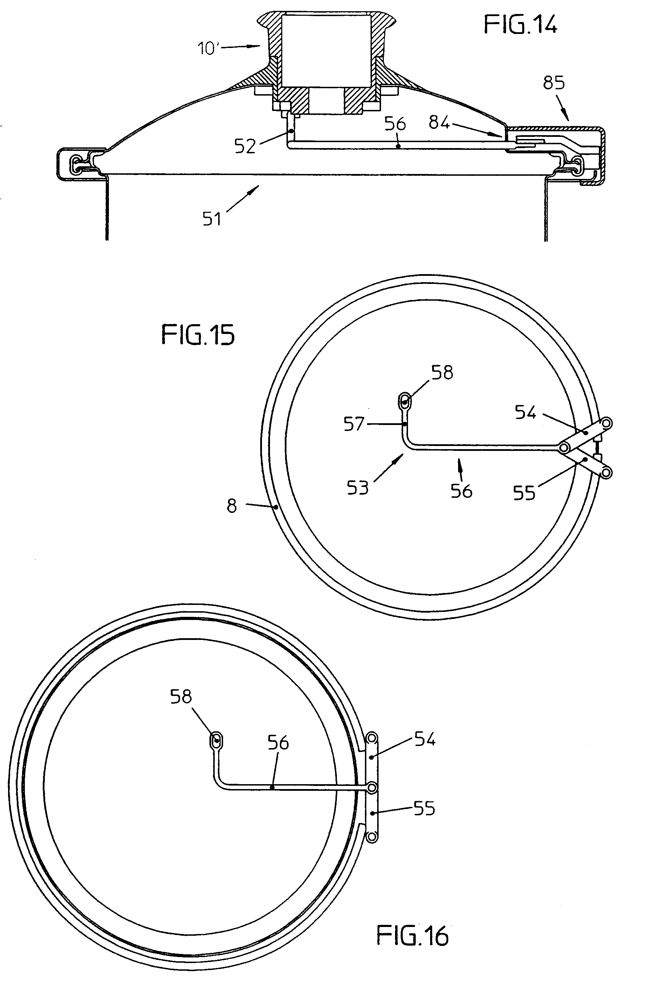

Der Deckel 51 nach Figur 14 weist einen um eine vertikale Achse drehbar oder schwenkbar gelagerten Griffknopf 10' auf, der einen exzentrisch angeordneten Stift 52 trägt, durch den ein Gestänge 53 bewegbar ist, das das tangentiale Spreizen des Verschluss-Ringes 8 bewirkt. Das Gestänge 53 umfasst zwei vorzugsweise gleiche Arme 54, 55, die an einem Ende gemeinsam mit dem Ende einer im wesentlichen radial angeordneten Stange 56 gelenkig verbunden sind. Die anderen Enden der Arme 54, 55 sind gelenkig mit je einem Ende des Verschluss-Ringes 8 verbunden. Der andere Endbereich 57 der Stange 56 ist gebogen und weist endseitig einen länglichen Schlitz 58 auf, in den der Stift 52 eingeführt ist, um eine Schwenkbewegung des Knopfs 10 in eine Verschiebung der Stange 56 umzuwandeln.

In der Ruhelage bilden die Arme 54, 55 eine V-förmige Konfiguration, und die Enden des Verschluss-Ringes 8 drücken stirnseitig gegeneinander. Wenn die Stange 56 radial nach aussen verschoben wird, gehen die Arme 54, 55 gegen die Federwirkung des Verschluss-Ringes 8 in eine gestreckte Position über (Figur 16), die das tangentiale Spreizen des Verschluss-Ringes 8 bewirkt.

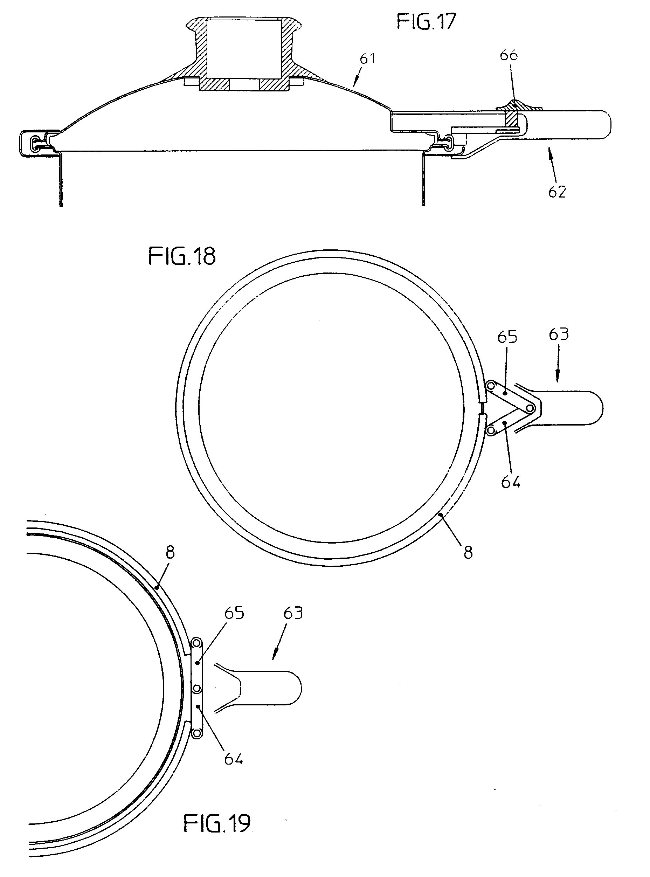

Der Deckel 61 nach Figur 17 weist eine seitliche Erweiterung 62 auf, die als Träger für ein Gestänge 63 (Figuren 18, 19) mit zwei Armen 64, 65 und für einen Schiebeknopf 66 (Figur 17) dient. Das eine Ende der Arme 64, 65 ist gelenkig mit je einem Ende des Verschluss-Ringes 8 verbunden. Die anderen Enden der Arme 64, 65 sind gemeinsam durch den Schiebeknopf 66 verschiebbar. In der Ruhelage bilden die Arme 64, 65 eine V-förmige Konfiguration, wobei die Enden des Verschluss-Ringes 8 stirnseitig gegeneinander drücken. Wenn der aussenseitige Schiebeknopf 66 radial zum Zentrum des Deckels hin verschoben wird, gehen die Arme 64, 65 gegen die Federwirkung des Verschluss-Ringes 8 in eine gestreckte Konfiguration über, die dem offenen Zustand des Deckels entspricht.

Figur 20 zeigt im Querschnitt einen einfachen Deckel 1 nach der Erfindung mit einem peripherisch angeordneten Hohlkörper 71, der eine vertikale abgerundete Wandung 72 aufweist, die oben und unten in je eine flache Ringwandung 73 bzw. 74 übergeht. Die Verbindung zwischen dem Deckel 1 und dem Hohlkörper 71 kann beispielsweise durch eine peripherische Schweisszone am Innenrand der oberen Ringwandung 73 hergestellt werden. Vorzugsweise ist der Hohlkörper 71 derart ausgestaltet, dass sich die Ringwandungen 73 und 74 in zwei parallelen Ebenen befinden. Der Innendurchmesser der unteren Ringwandung 74 ist merklich grösser als der Innendurchmesser der oberen Ringwandung 73 und auch etwas grösser als der äussere Nenndurchmesser des Topfrandes 2, so dass im offenen Zustand der Deckel leicht vom Topf bzw. Behälter abgenommen werden kann.

Auf dem Deckelrand ist, wie in Figur 20 dargestellt, eine im Querschnitt im wesentlichen umgekehrt L-förmig ausgestaltete Ringdichtung 75 aufgesteckt, die etwas elastisch ist, um die Partien 4 und 5 des Topf- bzw. Deckelrandes in einem kleinen Abstand zu halten. Figur 20 zeigt den Verschluss-Ring 8 im geschlossenen Zustand, bei dem die Erweiterung 6 den unteren Teil des Verschluss-Ringes 8 hinter seiner C-Oeffnung hintergreift, so dass er dadurch eingeklemmt bleibt. Beim Spreizen des Verschluss-Ringes 8 wird sein Durchmesser grösser, die Dichtung 75 gibt nach, die Partien 4 und 5 nähern sich und der Verschluss-Ring 8 wird von der ihn haltenden Erweiterung 6 befreit. Der Verschluss-Ring 8 ruht dann auf der unteren Ringscheibe 74 an einer inneren Ecke des Hohlkörpers 71 in der aus der Figur 20 ersichtlichen Weise, und zwar so lange wie die Spreizkraft wirkt. Wenn die Spreizkraft verschwindet, verengt sich der Durchmesser des Verschluss-Ringes 8, der durch die geneigte Rampe der Erweiterung 7 geführt in die geschlossene Position einspringt.

Der Deckel kann auch einen Oberdeckel 21' (Figur 5) und einen Unterdeckel 21'' aufweisen, und die Ringdichtung 75 kann beispielsweise auch im wesentlichen U-förmig oder G-förmig ausgebildet sein. In einigen Figuren wurde zur Vereinfachung der Zeichnung die Ringdichtung weggelassen.

Der Verschlussring 8 ist im Querschnitt vorzugsweise C-förmig ausgebildet; er kann jedoch irgendeine andere Form aufweisen, und zwar auch ohne C-Oeffnung, insbesondere wenn er ringförmig ausgebildete Erweiterungen aufweist, die den erwähnten Halterungs- bzw. Führungseffekt bewirken.

Wenn der Verschlussring 8, wie in Figur 20 dargestellt, einen C-förmigen Querschnitt aufweist, können die nach unten gebogenen Erweiterungen 6 und 7 wie ein Hemmkeil bzw. als Führungskeil wirken. Die Erweiterungen 6 und 7 können auch gerade und/oder in allen Varianten nach unten und/oder nach oben gebogen sein. Falls eine andere Form für den Querschnitt des Verschlussringes 8 gewählt wird, können entsprechende ringförmig ausgebildete Erweiterungen oder Vorsprünge vorgesehen sein.

Figur 21 zeigt den insbesondere für einen Doppeldeckel vorgesehenen Verschlussring in offener Stellung, bei der er an der Wandung 72 rundum anliegt. Dies ist eine Voraussetzung dafür, dass er den Topfrand völlig freigibt. Beim Oeffnen wird er sich in einer Uebergangsphase zuerst etwas exzentrisch bewegen, und erst durch die Anlage an der Wandung 72 ist eine mittige Lage wieder sichergestellt.

Die Verschlussmechanismen, die durch ein gehäuseartiges Gebilde aus Kunststoff oder Metall abgedeckt sein können, können sich auf der oberen oder auf der unteren Seite des Deckels oder des Oberdeckels oder des Unterdeckels befinden, wenn es sich um einen Doppeldeckel handelt. In solchen Deckeln ist mindestens ein Schlitz vorhanden, durch den ein Verbindungselement geführt ist, das den Verschlussmechanismus mit den Enden des Verschluss-Ringes 8 verbindet. Zu diesem Zweck kann der Hohlkörper 71 sonst auch eine Unterbrechung im Bereich der Verbindungselemente, z.B. 82 und 83 in Figur 4, aufweisen, die den Verschlussmechanismus mit dem Verschluss-Ring verbinden. In der Ausführung nach Figur 14 ist beispielsweise eine Bohrung 84 statt eines Schlitzes im Deckel vorgesehen, durch die die Stange 56 verschoben werden kann.

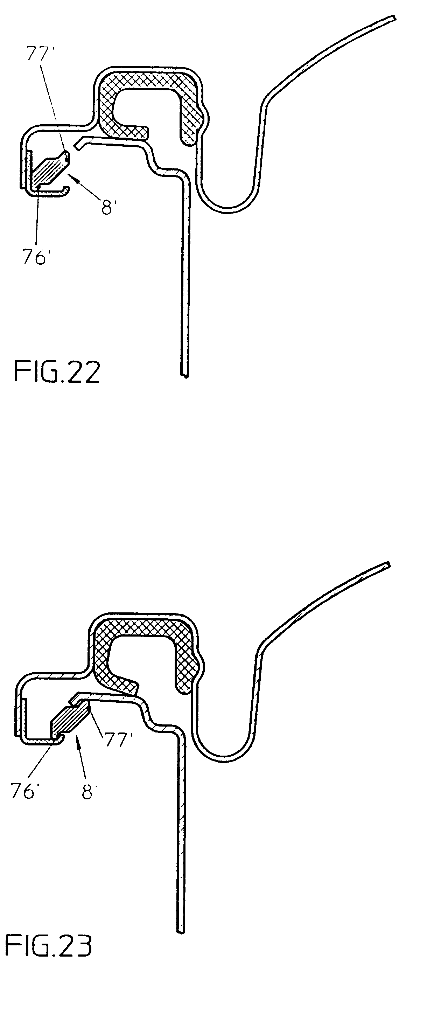

Der Verschluss-Ring 8' nach Figuren 22 und 23 ist angenähert in Form eines Rhomboids ausgestaltet und weist zwei Vorsprünge 76' und 77' auf, die dieselbe Funktion wie die Vorsprünge 76 bzw. 77 des C-Verschluss-Rings 8 erfüllen.

Der Verschluss-Ring 8 oder 8' ist vorzugsweise vorgespannt, das heisst, dass er bei seinem minimalen Durchmesser auch eine Federkraft entwickelt, derart, dass in der geschlossenen Lage ein Druck zwischen seinen zwei Stirnseiten ausgeübt wird.

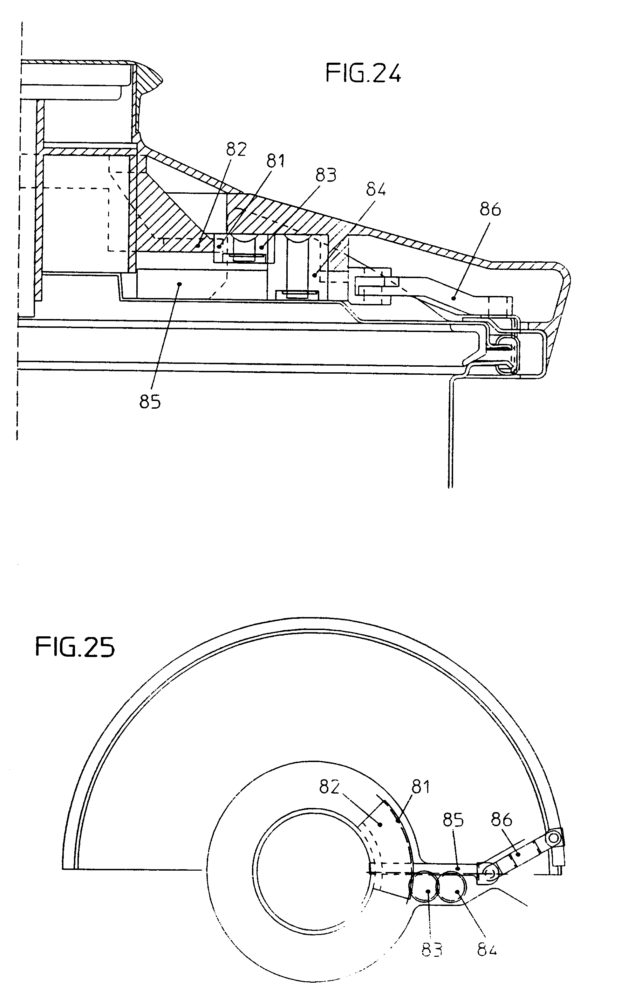

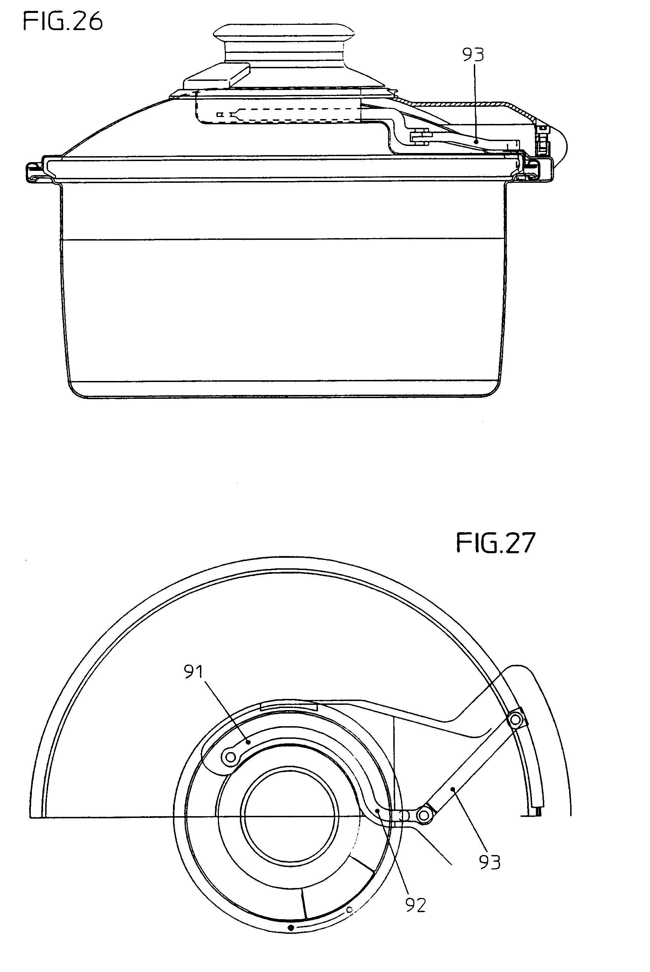

In weiterer Ausgestaltung der fünften Ausführung nach der vorliegenden Erfindung kann die Kraftübertragung vom Dekkelknopf an die Enden eines Verschluss-Rings 8 oder 8' mit einer Vorrichtung nach Figuren 24, 25 oder nach Figuren 26, 27 erfolgen.

Bei der Variante nach Figuren 24, 25 erfolgt die Kraftübertragung über die Verzahnung 81 eines solidarisch mit dem Drehknopf drehbaren Sektors 82 und über die Verzahnungen zweier Ritzel 83, 84 auf eine Zahnstange 85, die radial bewegbar gelagert ist. Der Endbereich der Zahnstange 85 ist über zwei ein spreizbares V-förmiges Gebilde bildende Hebel gelenkig mit dem Endbereich des Verschluss-Rings 8 bzw. 8' verbunden. In den Figuren ist nur einer dieser Hebel 86 dargestellt. Aus Figur 24 ist ersichtlich, dass das Ritzel 83 relativ flach ist und sich oberhalb der oberen Fläche der Zahnstange 85 befindet, so dass es diese nicht berührt. Bei der Variante nach Figuren 26, 27 erfolgt die Kraftübertragung über eine kreisbogenförmige Stange 91, die eine gebogene Endpartie 92 aufweist. Der Endbereich dieser Endpartie 92 ist gelenkig über zwei ein spreizbares V-förmiges Gebilde bildende Hebel gelenkig mit dem Endbereich des Verschluss-Rings 8 bzw. 8' verbunden. In den Figuren ist nur einer dieser Hebel 93 dargestellt.

Anstelle des Hohlkörpers 71 können auch peripherisch angeordnete beispielsweise durch Abstützungselemente gebildete Zentrier-Mittel eingesetzt werden, die im offenen Zustand eine ringförmige Zentrierung des Verschluss-Rings (8; 8') im Deckel bewirken. Der Hohlkörper 71 kann beispielsweise auch Öffnungen aufweisen oder mindestens teilweise gitterförmig oder in Form einer Armatur ausgebildet sein. Vorzugsweise weisen die Berührungsflächen zwischen dem Verschluss-Ring und den Zentrier-Mitteln einen sehr niedrigen Reibungskoeffizienten auf. Vorzugsweise sind die Zentrier-Mittel mindestens in dieser Berührungsfläche aus Kunststoff, um eine Metall/Kunststoff-Paarung zu bilden. Bei einer anderen Ausführung des erfindungsgemässen Deckels ist der Verschluss-Ring im ungespannten Zustand offen, so dass er eine Federkraft entwickelt, die beim Vermindern des Durchmessers zunimmt. Der entsprechende Verschlussmechanismus arbeitet dann in umgekehrter Richtung.

## Patentansprüche

1. Deckel für einen Behälter mit einem abgewinkelten umlaufenden Behälterrand, wobei der Deckel (1) einen peripherisch am Rand des Behälters (2) wirkenden Verschlussmechanismus (28, 29; 46, 46'; 54, 55; 64, 65) aufweist, wobei peripherisch am Rand des Deckels (1) ein offener Verschluss-Ring (8; 8') untergebracht ist, der einen grossen Durchmesser im Vergleich zu seiner Höhe hat und der in seinem Verschliessungszustand zwischen dem Endbereich einer Partie (4) des umlaufenden Behälterrandes (2) und dem Endbereich einer am Deckelrand ringförmig ausgebildeten abgewinkelten Partie (5) einklemmbar ist, wobei der Verschlussmechanismus Mittel (28, 29; 46, 46'; 54, 55; 64, 65) umfasst, um den Durchmesser des Verschluss-Ringes (8; 8') zu ändern, wobei der Verschluss-Ring (8; 8') aus Metall mit elastischen Eigenschaften besteht, eine sich beim Erweitern oder Einengen des Verschluss-Ringes (8; 8') im Durchmesser verändernde Federkraft entwickelt, und derart ausgebildet ist, dass er in der Höhe eine im wesentlichen undeformierbare Form aufweist, dadurch gekennzeichnet, dass mit dem Deckel (1) verbundene Zentrier-Mittel (71, 72, 74) vorhanden sind, um im offenen Zustand eine ringförmige Zentrierung des Verschluss-Ringes (8; 8') im Deckel (1) zu bewirken.

2. Deckel nach Anspruch 1, dadurch gekennzeichnet, dass die Zentrier-Mittel durch einen seitlichen ringförmig ausgebildeten Hohlkörper (71) oder durch einzelne Abstützungselemente gebildet sind, die einen Bewegungsraum für den erweiterten Verschluss-Ring gewähren und ihn peripherisch im erweiterten offenen Zustand zentriert halten.

3. Deckel nach Anspruch 1 oder 2, dadurch gekennzeichnet, das die Zentrier-Mittel (71) eine erste Ringwandung (73) umfassen, die im Bereich ihres Innendurchmessers mit dem Deckel (1) verbunden ist, und eine zweite Ringwandung (74) aufweisen, deren Innendurchmesser derart dimensioniert ist, dass der Deckel mit wenig Spiel auf einen Behälter aufgesetzt werden kann.

4. Deckel nach einem der Ansprüche 1 bis 3, dadurch gekennzeichnet, dass der Verschluss-Ring (8; 8') mindestens einen in der Höhe im wesentlichen undeformierbaren ringförmigen Vorsprung (76;77;76';77') aufweist, wobei der Deckel (1) eine ringförmig ausgebildete Randpartie (5) mit einer ringförmig ausgebildeten Erweiterung aufweist und/oder wobei der Deckel zur Verwendung bei einem Behälter vorgesehen ist, der eine ringförmige Randpartie (4) mit einer ringförmig ausgebildeten Erweiterung (6) aufweist, und dass in beiden Fällen dieser Vorsprung ausgestaltet ist, um auf eine dieser Erweiterungen eine Haltekraft auszuüben, die vorzugsweise über einen elastischen Dichtungsring (75) eine unverlierbare Verbindung zwischen Deckel und Behälter bewirkt.

5. Deckel nach Anspruch 4, dadurch gekennzeichnet, dass der Verschluss-Ring (8') derart ausgebildet ist, dass die Erweiterung (6) der Randpartie (4) des Behälters mit dem einen ringförmigen Vorsprung (76) des Verschluss-Ringes (8') zusammenwirkt, und dass der andere ringförmige Vorsprung (77) des Verschluss-Ringes mit einer Erweiterung (7) des Deckels zusammenwirkt.

6. Deckel nach einem der Ansprüche 1 bis 5, dadurch gekennzeichnet, dass der Verschluss-Ring (8) einen C-förmig ausgebildeten Querschnitt mit einer C-Öffnung aufweist, in die das Ende einer Randpartie (5) des Deckels (1) und das Ende einer ringförmigen Randpartie (4) des Behälters einführbar sind, um den Verschluss-Ring (8) in einer Lage eingeklemmt zu halten, in der er eine unverlierbare Verbindung zwischen Deckel und Behälter bewirkt.

7. Deckel nach einem der Ansprüche 1 bis 6, dadurch gekennzeichnet, dass er eine Unterbrechung oder mindestens einen Schlitz oder eine Bohrung (84) aufweist, durch die ein bewegbares Verbindungselement für die Übertragung einer Kraft vom Verschlussmechanismus an die Enden des offenen Verschluss-Ringes (8; 8') eingeführt ist.

8. Deckel nach einem der Ansprüche 1 bis 7, dadurch gekennzeichnet, dass der Verschlussmechanismus ein Zangensystem oder eine Schwenkgriffvorrichtung oder eine Klemmgriffanordnung oder ein Aussengriffsystem oder eine Schiebegriffvorrichtung umfasst oder einen Drehgriff aufweist, der bei Drehung eine Verschiebung einer Stange (56;85;91,92) bewirkt, die über zwei Arme (54,55;86;93) und Verbindungselemente ein Spreizen der Enden des Verschluss-Ringes (8; 8') ermöglicht.

9. Deckel nach einem der Ansprüche 1 bis 8, dadurch gekennzeichnet, dass die Berührungsflächen des Verschlussringes (8; 8') und der Zentrier-Mittel eine gute Gleitfähigkeit aufweisen, und zwar vorzugsweise durch eine Metall/Kunststoff-Paarung.

10. Deckel nach einem der Ansprüche 1 bis 9, dadurch gekennzeichnet, dass der Verschluss-Ring (8; 8') eine Federkraft entwickelt, die beim Erweitern seines Durchmessers zunimmt, und/oder dass er vorgespannt ist.

## Claims

1. Lid for a container with a bent peripheral container rim, whereby said lid (1) includes a closing mechanism (28, 29; 46, 46'; 54, 55; 64, 65) acting peripherically at the rim of the container (2), whereby peripherically at the lid's (1) rim is lodged an open closing-belt (8; 8') which has a large diameter compared to its height, and is able to be clamped together, in its closed state, between the end region of a part (4) of the peripheral container rim (2) and the end region of a circular, bent part (5) of the lid rim, whereby the closing mechanism (28, 29; 46, 46'; 54, 55; 64, 65) comprises means permitting to change the diameter of the closing belt (8; 8'), the closing belt (8; 8') is made from metal with elastic properties and develops a spring force which depends on the closing-belt's diameter and is made such as to keep with respect to its height an essentially non-deformable shape, characterized in that centring means (71, 72, 74) are provided and connected to the lid (1) to effect in the open state a circular centring of the closing belt (8; 8') in the lid (1).

2. Lid according to claim 1, wherein the centring means are formed by a lateral, ring shaped hollow body (71) or by singular support elements which ensure enough movement space for the enlarged closing-belt and which hold it peripherically centred in the enlarged open state.

3. Lid according to claim 1 or claim 2, wherein the centring means (71) comprise a first ring shaped wall (73), which is connected in the region of its inner diameter with the lid (1), and a second ring-shaped wall (74) with an inner diameter such that the lid just fits into a container.

4. Lid according to one of claims 1 to 3, wherein the closing-belt (8; 8') comprises at least one protusion (76; 77; 76'; 77') which is in its height non-deformable, whereby the lid (1) comprises a ring shaped rim part (5) with a ring shaped enlargement and/or whereby the lid is provided for use with a container comprising a ring-shaped rim part (4) with a ring shaped enlargement (6), and wherein in both cases said protrusion is made such as to exert a retaining force on said enlargements causing preferably by the means of an elastic ring shaped joint (75) a non-loosable connection between lid and container.

5. Lid according to claim 4, wherein the closing-belt (8') is made such that enlargement (6) of the rim part (4) of the container interacts with one of the ring shaped protrusions (76) of the closing-belt (8') and wherein the other, ring shaped protrusion (77) of the closing-belt interacts with an enlargement (7) of the lid.

6. Lid according to one of claims 1 to 5, wherein the closing-belt (8) comprises a C-shaped cross-section with a C-opening into which the end of a rim part (5) of the lid (1) and the end of a ring shaped rim part (4) of the container fit such as to pince the closing belt (8) in a position in which it causes a non-loosable connection between lid and container.

7. Lid according to one of claims 1 to 6, wherein the lid comprises an interruption or at least a slit or a hole (84) through which a movable connection element for the transmission of a force from the closing mechanism to the ends of the open closing-belt (8; 8') is conducted.

8. Lid according to one of claims 1 to 7, wherein the closing mechanism comprises a pincer system or a pivoting handle system or a gripping-handle system or an exterior-handle system or a push-pull-handle system or whereby the closing mechanism has a rotating-handle system such as to cause, upon rotation, a displacement of a bar (56; 85; 91; 92) which causes a spreading-out of the ends of the closing-belt (8; 8') by the means of the two legs (54; 55; 86; 93) and other connection elements.

9. Lid according to one of claims 1 to 8, wherein the contact surfaces of the closing-belt (8; 8') and the centring means have good gliding characteristics, preferably through the choice of a metal/plastic couple.

10. Lid according to one of claims 1 to 9, wherein the closing belt (8; 8') develops a spring force which increases upon enlargement of its diameter and/r that said closing-belt is prestressed.

## Revendications

1. Couvercle pour un récipient présentant un bord périphérique du récipient rabattu, dans le cas duquel le couvercle (1) présente un mécanisme de fermeture (28, 29 ; 46, 46' ; 54, 55 ; 64, 65) qui agit périphériquement sur le bord du récipient (2), dans le cas duquel est logé, en périphérie, sur le bord du couvercle (1), un anneau de fermeture ouvert (8 ; 8') qui a un grand diamètre en comparaison de sa hauteur et que, dans son état de fermeture, on peut serrer entre la zone d'extrémité d'une partie (4) du bord périphérique (2) du récipient et la zone d'extrémité d'une partie (5) du bord du couvercle rabattue en forme d'anneau, dans le cas duquel le mécanisme de fermeture comporte des moyens (28, 29 ; 46, 46' ; 54, 55 ; 64, 65) pour modifier le diamètre de l'anneau de fermeture (8 ; 8'), dans le cas duquel l'anneau de fermeture (8 ; 8') est constitué d'un métal à propriétés élastiques, développe une force élastique qui se modifie par expansion ou rétrécissement du diamètre de l'anneau de fermeture (8 ; 8') et qui est conçu de façon à présenter en hauteur une forme sensiblement indéformable, caractérisé par le fait qu'il y a des moyens de centrage (71, 72, 74), liés au couvercle (1) pour, à l'état ouvert, opérer dans le couvercle (1) un centrage annulaire de l'anneau de fermeture (8 ; 8').

2. Couvercle selon la revendication 1, caractérisé par le fait que les moyens de centrage sont formés par un corps creux (71) de forme latéralement annulaire ou par des éléments d'appui isolés qui offrent un espace de mouvement pour l'anneau de fermeture, expansé, et le maintiennent centré en périphérie à l'état ouvert expansé.

3. Couvercle selon la revendication 1 ou 2, caractérisé par le fait que les moyens de centrage (71) comportent une première paroi annulaire (73) qui est reliée avec le couvercle (1) dans la zone de son diamètre intérieur, et présentent une seconde paroi annulaire (74) dont le diamètre intérieur est dimensionné de façon que le couvercle puisse se poser sur un récipient avec peu de jeu.

4. Couvercle selon l'une des revendications 1 à 3, caractérisé par le fait que l'anneau de fermeture (8 ; 8') présente au moins une saillie annulaire (76 ; 77 ; 76' ; 77) sensiblement non déformable en hauteur, dans le cas duquel le couvercle (1) présente une partie de bordure (5) de forme annulaire avec une extension de forme annulaire et/ou dans le cas duquel le couvercle est prévu pour emploi dans le cas d'un récipient qui présente une partie de bordure annulaire (4) présentant une extension de forme annulaire (6) et que, dans les deux cas, cette saillie est réalisée pour exercer, sur l'une de ces extensions, une force de maintien qui, de préférence par l'intermédiaire d'une bague d'étanchéité élastique (75), opère entre couvercle et récipient une liaison qui ne peut pas disparaître.

5. Couvercle selon la revendication 4, caractérisé par le fait que l'anneau de fermeture (8') est conçu de façon que l'extension (6) de la partie de bordure (4) du récipient collabore avec l'une des saillies annulaires (76) de l'anneau de fermeture (8') et que l'autre saillie annulaire (77) de l'anneau de fermeture collabore avec une extension (7) du couvercle.

6. Couvercle selon l'une des revendications 1 à 5, caractérisé par le fait que l'anneau de fermeture (8) présente une section en forme de C avec une ouverture du C dans laquelle peuvent s'introduire l'extrémité d'une partie de bordure (5) du couvercle (1) et l'extrémité d'une partie de bordure annulaire (4) du récipient pour maintenir serré l'anneau de fermeture (8) dans une position dans laquelle il opère entre couvercle et récipient une liaison qui ne peut pas disparaître.

7. Couvercle selon l'une des revendications 1 à 6, caractérisé par le fait qu'il présente une coupure ou tout au moins une fente ou un perçage (84) par lequel passe un élément de liaison mobile pour la transmission d'une force, du mécanisme de fermeture, aux extrémités de l'anneau de fermeture (8 ; 8'), ouvert.

8. Couvercle selon l'une des revendications 1 à 7, caractérisé par le fait que le mécanisme de fermeture comporte un système de pince ou un dispositif de poignée pivotante ou un mécanisme de poignée de bridage ou un système de poignée extérieure ou un dispositif de poignée coulissante ou bien présente une poignée tournante qui, lors d'une rotation, opère un coulissement d'une tringle (56 ; 85 ; 91, 92) qui, par l'intermédiaire de deux bras (54, 55 ; 86 ; 93) et d'éléments de liaison, permet une expansion des extrémités de l'anneau de fermeture (8 ; 8').

9. Couvercle selon l'une des revendications 1 à 8, caractérisé par le fait que les surfaces de contact de l'anneau de fermeture (8 ; 8') et des moyens de centrage présentent une bonne aptitude au glissement et ceci de préférence au moyen d'un appariement métal/plastique.

10. Couvercle selon l'une des revendications 1 à 9, caractérisé par le fait que l'anneau de fermeture (8 ; 8') développe une force élastique qui croît lors de l'expansion de son diamètre, et/ou qu'il est précontraint.
